# EUROPÄISCHE PATENTSCHRIFT

(11) **EP 1 401 788 B1**
(45) Veröffentlichungstag und Bekanntmachung des Hinweises auf die Patenterteilung: **16.02.2005**
(21) Anmeldenummer: 02754235.6
(22) Anmeldetag: 19.06.2002
(51) Int. Cl.: C05D 9/00, C05F 3/00

(54) **BODENMATERIAL**
FERTILIZER
ENGRAIS

(30) Priorität: 20.06.2001 DE 10129385
(43) Veröffentlichungstag der Anmeldung: 31.03.2004
(73) Patentinhaber: Stollenwerk, Nikolaus, 52152 Simmerath (DE); Jüssen, Marc, 52064 Aachen (DE)
(72) Erfinder: Jüssen, Armin, 52152 Simmerath (DE)
(74) Vertreter: Kutzenberger, Helga, Dr.
(86) Internationale Anmeldenummer: PCT/DE2002/002246
(87) Internationale Veröffentlichungsnummer: WO 2003/000622

(56) Entgegenhaltungen:
- WO-A-01/16032
- DE-A- 3 941 829
- DE-A- 19 922 872
- US-A- 5 472 475

## Beschreibung

Die vorliegende Erfindung betrifft Bodenmaterial.

Natürliches Bodenmaterial ist bekannt. Dieses steht jedoch nicht überall in ausreichender Menge zur Verfügung bzw. wird durch Erosion weggetragen, weggeschwemmt und/oder ausgelaugt.

Aufgabe der Erfindung ist es, hier Abhilfe zu schaffen und ein Bodenmaterial anzugeben, daß leicht und preiswert herzustellen sowie fruchtbar und zur Kultivierung von Pflanzen gut geeignet ist.

Dies Aufgabe wird mit einem Material nach Patentanspruch 1 gelöst. Vorteilhafte Ausführungsformen sind Gegenstand der Unteransprüche.

Kern der Erfindung ist die Erkenntnis, daß in großem Maße Stoffe anfallen, die zwar jeweils nicht alleine, aber in der hier angegebenen Kombination als Bodenmaterial verwendet werden können. Bei diesen Stoffen handelt es sich um a) behandelten Hafenschlick; b) behandelte Gülle und c) ein geeignetes Füllmaterial.

### Hafenschlick

Unter Hafenschlick sollen dabei verallgemeinernd in Hafenbecken abgelagerte Sedimente, Sedimente entlang von oder nahe an Seewegen, Sedimente an Flußmündungen od. dgl. verstanden werden. Hafenschlick ist allgemein mit giftigen Organozinnverbindungen belastet. Behandlungen wie bei herkömmlichem, unbelastetem Hafenbaggergut wie Umlagern, Eggen, Verklappen, Verspülen od. dgl. scheiden angesichts der Ökotoxizität aus. Zur dauerhaften Lösung der genannten Probleme wurde daher ein Dekontaminierungsverfahren entwickelt- vgl. WO 01/16032. Mit diesem Verfahren kann eine sichere, schnelle und preiswerte Entgiftung von Hafenschlick, insbesondere von mit Organozinnverbindungen belastetem Hafenschlick, mittels Elektroflotation durchgeführt werden. Der Hafenschlick stellt danach kein Umweltrisiko mehr dar.

Entgifteter Hafenschlick ist ein sehr fester und schwerer Kleiboden mit kleiner Körnung. Wegen seines hohen Lehmanteils wird er nicht mehr vom Wind mitgerissen. Zudem besitzt der Boden eine sehr hohe Fähigkeit, Wasser zu speichern.

### Hafenschlickbehandlung

Durch Oxidationsvorgänge mittels in der Reaktionszelle erzeugtem radikalischen Sauerstoff wird das giftige Tributhylzinn gespalten und in ungiftige organische Verbindungen überführt. Dies gilt auch für weitere zinnorganischen Verbindungen und andere Gifte. Zudem werden Schwermetalle und andere CSB / BSB relevanten Stoffe oxydiert. Gleichzeitig wird das Wasser- Feststoffgemisch geflockt und kann separiert werden.

Der Hafenschlick wird so auf kostengünstige, einfache Weise entgiftet und es entsteht ein fester Kleiboden. Dieser ist ein neuer Rohstoff, der nicht den üblichen Abfallbestimmungen unterliegt. Das Filtrat zeigt nach der Behandlung sehr geringe Werte für den Sauerstoffbedarf. Die übriggebliebene Lösung ist frei von TBT und Schwermetallen und weißt deutlich gesenkte AOX-, TOC- und Mineralöl KW- Werte auf. Das Entsorgungsproblem ist gelöst, eine Beseitigung über Sondermülldeponien ist nicht mehr notwendig.

Die Flocke wird in eine Filterpresse oder Schlammpresse gepumpt und weiter entwässert. Das Klarwasser ist frei von Belastungsstoffen, nicht mehr umweltschädlich und kann, ohne jegliche weitere Behandlung oder Aufbereitung, in das Hafenbecken eingeleitet werden.

### Gülle

Gülle ist ein natürlicher Dünger, der nach einer Behandlung leicht zu verarbeiten ist

Die Rinder- oder Schweinegülle wird mit Separatoren verdickt, so dass alle guten Düngeeigenschaften erhalten bleiben. Das übrigbleibende Wasser wird nachbehandelt, so dass es weiterverwertet werden kann.

### Güllebehandlung

Im ersten Schritt erfolgt eine Behandlung der Gülle mittels Zentrifugen oder Schneckenpressen. Der so gewonnene Feststoff kann weiter eingesetzt werden. Die ursprüngliche Gülle wird in Feststoffe und Flüssigkeit getrennt Dabei werden Schwermetalle und andere CSB / BSB relevanten Stoffe oxydiert (vgl. WO 01/17912). Es entsteht ein fester Wirtschaftsdünger. Der getrocknete Feststoff ist reichhaltig an Nitrat und Phosphat und hat demnach gute Düngeeigenschaften.

Er wird mit Hafenschlick und Strukturmaterial (s.u.) gemischt und ergibt den neuen Boden. Das abgetrennte Wasser ist kann einer weiteren Verwendung zugeführt werden. Das Brauchwasser unterliegt nicht mehr der Gülleverordnung, ist frei von Belastungsstoffen und kann, ohne jegliche weitere Behandlung oder Aufbereitung, dem öffentlichen Kanalnetz zugeführt werden.

Die Flocke wird in eine Filterpresse gepumpt und weiter entwässert. Der Feststoff ist nach einer Analyse der RWTH Aachen als Wirtschaftsdünger klassifiziert.

"bei den von uns untersuchten Materialien handelt es sich um Wirtschaftsdünger im Sinne des §1, Abs. 2, Düngemittelgesetz vom 15. Nov. 1977 (BGB. I S. 2134, zuletzt geändert durch das Gesetz zur Änderung des Düngemittelgesetzes vom 17. Dez. 1999 (BGB.I.I S2451)".

Die Filtration des geflockten Abwassers erfolgt in der Regel in Zentrifugen oder Kammerfilterpressen. Hier erfolgt eine Trennung Wasser / Filtrat

In der Regel weist der Filterkuchen einen Wasseranteil von 60 % bis zu 40 % im Minimalfall auf.

### Füllmaterial

Das Trägermaterial dient dazu, die Körnung des Bodens zu verbessern. Somit wird der Boden besser durchlüftet und besitzt bessere Eigenschaften zum Anbau von Pflanzen. Hafenschlick und Gülle alleine sind als Boden unbrauchbar, da sie eine unzureichende Korngrößenverteilung besitzen. Ein nur aus diesen Komponenten bestehender Boden wäre zu fest. Durch die Verwendung von zuviel Gülle kann es zudem zu Überdüngungserscheinungen kommen.

Behandelter Hafenschlick und behandelte Gülle werden je nach Bedarf mit unterschiedlichem Material gemischt Dieses Trägermaterial kann verschieden beschaffen sein. Denkbar ist Sand, sandiges oder sonst unfruchtbares Bodenmaterial. Dieses kann direkt vor Ort entnommen werden, wo unfruchtbares Land in fruchtbares Ackerland oder Rasenflächen gewandelt wird.

Das Mischungsverhältnis ist je nach Bedarf variabel. Im Mittel kann jedoch von folgenden Werten ausgegangen werden. Diese können im Einzelfall um bis zu 30% abweichen:
Hafenschlick : Gülle : Trägermaterial 1:1:2

## Patentansprüche

1. Bodenmaterial, bestehend aus einem Gemisch aus entgiftetem Hafenschlick, behandelter Gülle und einem Füllmaterial.

2. Bodenmaterial nach Anspruch 1, bestehend aus einem Gemisch aus 15-35 % behandeltem Hafenschlick. 15-35 % behandelter Gülle und 35-65 % Füllmaterial.

3. Bodenmaterial nach Anspruch 2, bestehend aus einem Gemisch aus 20-30 % behandeltem Hafenschlick, 20-30 % behandelter Gülle und 40-60 % Füllmaterial.

4. Bodenmaterial nach Anspruch 3, bestehend aus einem Gemisch aus 25 % behandeltem Hafenschlick, 25 % behandelter Gülle und 50 % Füllmaterial.

5. Bodenmaterial nach einem der vorhergehenden Ansprüche, **dadurch gekennzeichnet, daß** der Hafenschlick von Organozinnverbindungen entgiftet ist.

6. Bodenmaterial nach einem der vorhergehenden Ansprüche, **dadurch gekennzeichnet, daß** die Gülle weitgehend entwässert ist und somit als Feststoff vorliegt.

7. Bodenmaterial nach einem der vorhergehenden Ansprüche, **dadurch gekennzeichnet, daß** die Gülle Schwermetalle und andere CSB / BSB relevante Stoffen nur in oxidierter Form enthält.

8. Bodenmaterial nach einem der vorhergehenden Ansprüche, **dadurch gekennzeichnet, daß** das Füllmaterial Sand, sandiges oder unfruchtbares Bodenmaterial oder eine Mischung hieraus umfaßt.

## Claims

1. Soil material consisting of a mixture of detoxified harbour silt, treated manure and a filler.

2. Soil material according to Claim 1, consisting of a mixture of 15-35% treated harbour silt, 15-35% treated manure and 35-65% filler.

3. Soil material according to Claim 2, consisting of a mixture of 20-30% treated harbour silt, 20-30% treated manure and 40-60% filler.

4. Soil material according to Claim 3 consisting of a mixture of 25% treated harbour silt, 25% treated manure and 50% filler.

5. Soil material according to one of the preceding claims, **characterized in that** the harbour silt is detoxified from organotin compounds.

6. Soil material according to one of the preceding claims, **characterized in that** the manure is substantially dewatered and is thus present as solid.

7. Soil material according to one of the preceding claims, **characterized in that** the manure comprises heavy metals and other COD/BOD relevant substances only in oxidized form.

8. Soil material according to one of the preceding claims, **characterized in that** the filler comprises sand, sandy or infertile soil material or a mixture thereof.

## Revendications

1. Matériau de sols, constitué d'un mélange de suspension d'avoine décontaminée, de lisier traité et d'un matériau de charge.

2. Matériau de sols selon la revendication 1, constitué d'un mélange de 15-35% de suspension d'avoine traitée, de 15-35% de lisier traité et de 35-55% de matériau de charge.

3. Matériau de sols selon la revendication 2, constitué d'un mélange de 20-30% de suspension d'avoine traitée, de 20-30% de lisier traité et de 40-60% de matériau de charge.

4. Matériau de sols selon la revendication 3, constitué d'un mélange de 25% de suspension d'avoine traitée, de 25% de lisier traité et de 50% de matériau de charge.

5. Matériau de sols selon l'une quelconque des revendications précédentes, **caractérisé en ce que** la suspension d'avoine est décontaminée des composés organoétain.

6. Matériau de sols selon l'une quelconque des revendications précédentes, **caractérisé en ce que** le lisier est pour l'essentiel asséché et est ainsi présent sous forme solide.

7. Matériau de sols selon l'une quelconque des revendications précédentes, **caractérisé en ce que** le lisier ne contient des métaux lourds et d'autres substances CSB/BSB pertinentes que sous forme oxydée.

8. Matériau de sols selon l'une quelconque des revendications précédentes, **caractérisé en ce que** le matériau de charge comprend du sable, un matériau de sol sableux ou stérile ou un mélange de ces derniers.
